# EUROPÄISCHE PATENTSCHRIFT

(11) **EP 4 360 840 B1**
(45) Veröffentlichungstag und Bekanntmachung des Hinweises auf die Patenterteilung: **20.08.2025**
(21) Anmeldenummer: 24020060.0
(22) Anmeldetag: 14.09.2020
(51) Int. Cl.: B28B 11/00, B28B 11/04, B28B 1/00, B33Y 10/00, B33Y 80/00, B41M 5/00, B44C 3/02, C04B 41/50, C04B 41/00, C04B 41/86, B41M 7/00, E04F 13/14, E04F 13/08

(54) **VERFAHREN ZUM ERZEUGEN EINES RELIEFARTIGEN DEKORS AUF EINER OBERFLÄCHE EINES KERAMISCHEN DRUCKMEDIUMS**
METHOD FOR PRODUCING A RELIEF-LIKE DECORATION ON A SURFACE OF A CERAMIC PRINT MEDIUM
PROCÉDÉ DE RÉALISATION D'UN DÉCOR EN RELIEF SUR UNE SURFACE D'UN SUPPORT D'IMPRESSION CÉRAMIQUE

(30) Priorität: 20.09.2019 IT 201900016802
(43) Veröffentlichungstag der Anmeldung: 01.05.2024
(62) Teilanmeldung aus: 20775184.3
(73) Patentinhaber: Durst Group AG, 39042 Brixen (IT)
(72) Erfinder: Harder, Alexander, 39050 Völs am Schlern (IT); Oberhuber, Dennis, 39040 Vahrn (IT); Waldner, Stefan, 39024 Mals (IT)
(74) Vertreter: Kempkens, Anke

(56) Entgegenhaltungen:
- EP-A2- 2 189 272
- CN-A- 108 527 625
- US-B2- 10 109 796

## Beschreibung

Die vorliegende Erfindung betrifft ein Verfahren zum Erzeugen eines reliefartigen Dekors auf einem Teil einer Oberfläche eines keramischen Druckmediums.

Aus dem Stand der Technik sind Verfahren zur Erzeugung einer dreidimensionalen Struktur auf keramischen Objekten mit einer Tropfen einer strukturbildenden Masse abgebenden Abgabevorrichtung bekannt.

In der EP 2 189 272 B1 wird beispielsweise die Realisierung einer derartigen dreidimensionalen Struktur auf einer Oberfläche eines keramischen Objektes erzielt, indem Tropfen einer strukturbildenden Masse mit einer Abgabevorrichtung auf ein zuvor auf die Oberfläche bedrucktes ein- oder mehrfarbiges Motiv abgegeben werden während das Objekt in eine Förderrichtung bewegt wird, und zwar auf einer Weise, dass die dreidimensionale Struktur durch halbzylinderförmige Erhebungen zur Erzeugung optischer Effekte in Verbindung mit dem darunter liegenden Motiv gebildet werden, welche Erhebungen sich quer zur Förderrichtung des Objektes erstrecken.

Die Anordnung der oben beschriebenen halbzylinderförmigen Erhebungen weist den Nachteil auf, dass die Erhebungen nicht immer eine ausreichende gegenseitige seitliche Stabilisierung und somit nicht immer eine ausreichende Haftung an die damit bedeckte Oberfläche aufweisen, wenn das Objekt beispielsweise relativ kräftigen mechanischem Abrieb ausgesetzt wird.

Unter einem Zylinder wird im Folgenden ein Körper bezeichnet, der von einer Mantelfläche und von zwei gegenüberliegenden Schnittkreisflächen eingeschlossen wird. Als Halbzylinder wird im Folgenden jene Hälfte des entsprechenden Körpers bezeichnet, die gebildet wird, wenn der Körper durch beide Schnittkreisflächen geschnitten ist. Entsprechend kann unter einem Halbzylinder im Folgenden ein Körper bezeichnet werden, der von einer Mantelfläche und von zwei gegenüberliegenden Schnittflächen eines Halbkreises sowie von einer Grundfläche eingeschlossen wird.

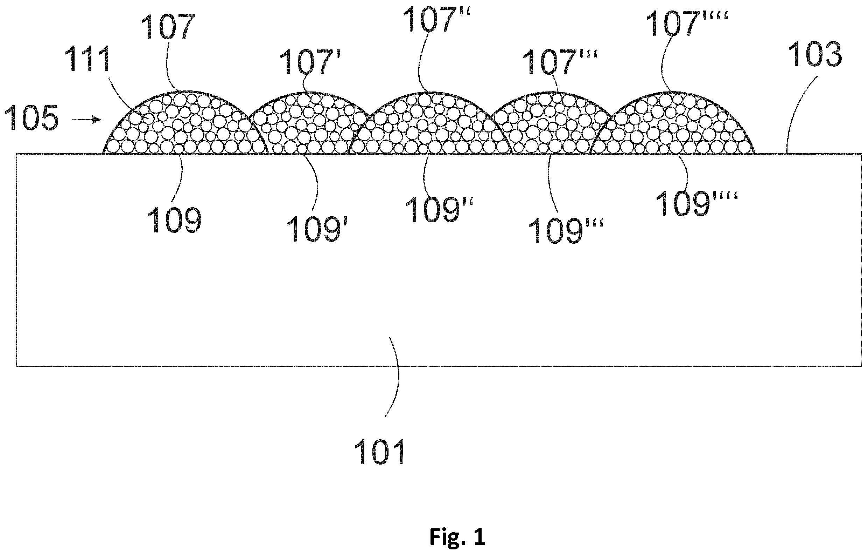

Aus der Stammanmeldung EP4031340A2 zu dieser Teilanmeldung ist ein Verfahren zum Erzeugen eines reliefartigen Dekors auf einer Oberfläche eines keramischen Druckmediums 101 bekannt (siehe Figur 1), umfassend die Schritte:
a) Bereitstellen eines keramischen Druckmediums 101;
b) Abgeben von Tropfen einer ersten Glasursuspension, die zumindest eine Fritte enthaltendes Glasurmaterial 111 in Form von Partikeln umfasst, mit einer Vielzahl von Düsen eines ersten Tintenstrahldruckers auf einen Teil der Oberfläche und Einengen der auf dem Teil aufgebrachten Tropfen, dergestalt, dass zumindest teilweise eingeengtes Glasurmaterial halbzylinderförmige Erhebungen ausbildet, wobei während des Abgebens der Tropfen eine kontinuierliche unidirektionale Relativbewegung zwischen den Düsen und dem Druckmedium 101 erfolgt;
c) Brennen des keramischen Druckmediums 101, um ein eingebranntes reliefartiges Dekor auf der Oberfläche des Druckmediums 101 zu erzeugen;
   wobei die Abgabe und das Einengen der Tropfen in Schritt (b) dergestalt erfolgen, dass eine erste Glasurschicht 105 mit unmittelbar benachbarten halbzylinderförmigen Erhebungen mit jeweils einer Grundfläche 109, 109', 109", 109‴, 109ʺʺ und Mantelfläche 107, 107', 107", 107‴, 107ʺʺ ausgebildet wird, deren jeweilige Längsachse sich in eine erste Richtung erstreckt, wobei deren Grundflächen 109, 109', 109", 109‴, 109ʺʺ und deren Mantelflächen 107, 107', 107", 107‴, 107ʺʺ miteinander teilflächig überlappen.

Mithilfe des oben angegebenen Verfahrens wird verfahrensbedingt die erste Glasurschicht mit unmittelbar benachbarten halbzylinderförmigen Erhebungen mit jeweils einer Grundfläche und Mantelfläche ausgebildet, deren jeweilige Längsachse sich in eine erste Richtung erstreckt, wobei deren Grundflächen und deren Mantelflächen miteinander teilflächig überlappen. Solche halbzylinderförmigen Erhebungen sind ein Beispiel von optisch wahrnehmbaren Streifen. Diese wirken auf einen Betrachter optisch inhomogen gegenüber nicht mit wahrnehmbaren Streifen versehenen, typischerweise flachen Oberflächenbereichen eines keramischen Druckmediums, und sind deshalb bei bestimmten Produktarten unerwünscht.

Bei Verfahren zum Erzeugen eines reliefartigen Dekors auf keramischen Druckmedien mit einer ersten Glasursuspension können sich ganz allgemein während der Ausbildung von Erhebungen aus Glasurmaterial und vor dem Brennen des keramischen Druckmediums Inhomogenitäten in den Erhebungen ausbilden, die beim Brennen nicht oder nur teilweise beseitigt werden können. Inhomogenitäten in den Erhebungen des reliefartigen Dekors können beispielsweise zu Stande kommen, wenn die Oberfläche des keramischen Druckmediums eine nicht homogene Partikelgrösseverteilung aufweist, die zu einem inhomogenen Absorptionsverhalten in Bezug auf die Glasursuspension führt, sodass Glasursuspension von einigen Bereichen der Oberfläche rascher absorbiert wird als von anderen Bereichen. Auch in einer Charge hergestellte keramischen Druckmedien können an ihrer Oberfläche voneinander abweichende Partikelgrößenverteilungen aufweisen. Weiter können Inhomogenitäten in den Erhebungen des reliefartigen Dekors beispielsweise zu Stande kommen, wenn Düsen des Tintenstrahldruckers verstopfen und keine Tropfen mehr abgeben oder teilweise verstopfen sodass unter Umständen lediglich Tropfen mit einer gegenüber der vorgesehenen Tropfenmasse kleineren Tropfenmasse abgegeben werden und/oder wenn Tropfen aufgrund schrägstrahlender Düsen nicht auf die gewünschte Position auf das Druckmedium auftreffen.

Es ist nun die Aufgabe eines zweiten Aspekts der Erfindung ein Verfahren zum Erzeugen eines reliefartigen Dekors auf einer Oberfläche eines keramischen Druckmediums anzugeben, das zu einer Reduktion oder gar Beseitigung von Inhomogenitäten in einer ersten Glasurschicht mit Erhebungen vor dem Brennen des Druckmediums führt, sodass eine Reduktion oder gar Beseitigung von Qualitätsunterschieden bei der Erzeugung von reliefartigen Dekoren auf keramischen Druckmedien ermöglicht wird.

Erfindungsgemäss wird die Aufgabe mit dem Verfahren gemäss dem zweiten Aspekt der Erfindung gelöst, das die Merkmale des Anspruchs 1 umfasst. Die Unteransprüche beziehen sich auf weitere vorteilhafte und gegebenenfalls zusätzlich erfinderische Ausführungsformen. Dem zweiten Aspekt der Erfindung liegt die Idee zugrunde, das Druckmedium und/oder die auf das Druckmedium aufgebrachten Tropfen in Schwingung zu versetzen, vorzugsweise dergestalt, dass eingeengtes Glasurmaterial Erhebungen mit jeweils im Wesentlichen flacher Oberfläche oder flacher Oberfläche ausbildet.

Dem dritten Aspekt der Erfindung liegt alternativ die Idee zugrunde, zumindest einen kontinuierlichen Fluidstrom aus einer fluidstromaktivierenden Vorrichtung gegen die Oberfläche des Druckmediums, auf die die Tropfen aufgebracht wurden, zu richten, vorzugsweise dergestalt, dass eingeengtes Glasurmaterial Erhebungen mit jeweils im Wesentlichen flacher Oberfläche oder flacher Oberfläche ausbildet.

Das erfindungsgemässe Verfahren zum Erzeugen eines reliefartigen Dekors auf einer Oberfläche eines keramischen Druckmediums wird durchgeführt, indem zunächst ein keramisches Druckmedium bereitgestellt wird. Anschliessend erfolgt ein Abgeben von Tropfen einer ersten Glasursuspension, die zumindest ein, eine Fritte enthaltendes Glasurmaterial in Form von Partikeln umfasst, mit einer Vielzahl von Düsen eines ersten Tintenstrahldruckers auf einen Teil der Oberfläche und Einengen der auf dem Teil aufgebrachten Tropfen, dergestalt, dass zumindest teilweise eingeengtes Glasurmaterial Erhebungen ausbildet. Während des Abgebens der Tropfen erfolgt eine kontinuierliche unidirektionale Relativbewegung zwischen den Düsen und dem Druckmedium. Anschliessend erfolgt ein Brennen des keramischen Druckmediums, um ein eingebranntes reliefartiges Dekor auf der Oberfläche des Druckmediums zu erzeugen.

Dementsprechend handelt es sich bei der Erfindung um ein Verfahren zum Erzeugen eines reliefartigen Dekors auf einer Oberfläche eines keramischen Druckmediums, umfassend die Schritte:
a) Bereitstellen eines keramischen Druckmediums;
b) Abgeben von Tropfen einer ersten Glasursuspension, die zumindest eine Fritte enthaltendes Glasurmaterial in Form von Partikeln umfasst, mit einer Vielzahl von Düsen eines ersten Tintenstrahldruckers auf einen Teil der Oberfläche und Einengen der auf dem Teil aufgebrachten Tropfen, dergestalt, dass zumindest teilweise eingeengtes Glasurmaterial Erhebungen ausbildet, wobei während des Abgebens der Tropfen eine kontinuierliche unidirektionale Relativbewegung zwischen den Düsen und dem Druckmedium erfolgt;
c) Brennen des keramischen Druckmediums, um ein eingebranntes reliefartiges Dekor auf der Oberfläche des Druckmediums zu erzeugen.

Nach dem zweiten Aspekt der Erfindung wird oder werden erfindungsgemäss in Schritt (b) das Druckmedium und/oder die auf das Druckmedium aufgebrachten Tropfen in Schwingung versetzt.

Dadurch wird eingeengtes Glasurmaterial Erhebungen mit jeweils im Wesentlichen flacher Oberfläche oder flacher Oberfläche ausgebildet, wenn beispielsweise das Druckmedium ausreichend schnell, und mit einer ausreichend grossen Amplitude und Frequenz mechanisch in Schwingung versetzt wird und/oder die auf das Druckmedium aufgebrachten Tropfen mit Schallwellen einer ausreichend grossen Schallintensität und Frequenz in Schwingung versetzt werden, indem die Oberfläche des Druckmediums, auf der die Tropfen aufgebracht wurden durch entsprechende Schallwellen beschallt wird, bevor die Tropfen über ein bestimmtes Mass, bevorzugt zumindest im Wesentlichen vollständig, eingeengt wurden. Dementsprechend wird gemäß einer bevorzugten Ausführungsform des zweiten Aspekts das Druckmedium und/oder die auf das Druckmedium aufgebrachten Tropfen in Schwingung versetzt, dergestalt, dass eingeengtes Glasurmaterial Erhebungen mit jeweils im Wesentlichen flacher Oberfläche oder flacher Oberfläche ausbildet.

Nach dem dritten Aspekt der Erfindung wird erfindungsgemäss zumindest ein kontinuierlicher Fluidstrom aus einer fluidstromaktivierenden Vorrichtung gegen die Oberfläche des Druckmediums, auf die die Tropfen aufgebracht wurden, gerichtet.

Dadurch wird eingeengtes Glasurmaterial Erhebungen mit jeweils im Wesentlichen flacher Oberfläche oder flacher Oberfläche ausgebildet, wenn beispielsweise ausreichend schnell zumindest ein kontinuierlicher und ausreichend homogener Fluidstrom aus einer fluidstromaktivierenden Vorrichtung gegen die Oberfläche des Druckmediums, auf die die Tropfen aufgebracht wurden, gerichtet wird, bevor die Tropfen über ein bestimmtes Mass, bevorzugt zumindest im Wesentlichen vollständig, eingeengt wurden. Dementsprechend werden gemäß einer bevorzugten Ausführungsform des dritten Aspekts die auf das Druckmedium aufgebrachten Tropfen zumindest ein kontinuierlicher, und vorzugsweise homogener, Fluidstrom aus einer fluidstromaktivierenden Vorrichtung gegen die Oberfläche des Druckmediums, auf die die Tropfen aufgebracht wurden, gerichtet, dergestalt, dass eingeengtes Glasurmaterial Erhebungen mit jeweils im Wesentlichen flacher Oberfläche oder flacher Oberfläche ausbildet.

Die erfindungsgemässen Lösungen haben jeweils den Vorteil, dass dadurch ein schnelles, und vorzugsweise ein im Wesentlichen vollständiges oder vollständiges, Ineinanderlaufen von auf das Druckmedium aufgebrachten benachbarten Tropfen ermöglicht wird.

Gemäß einer bevorzugten Ausführungsform des Verfahrens hätte sich ohne entsprechendes In-Schwingung-Versetzen verfahrensbedingt die erste Glasurschicht mit unmittelbar benachbarten halbzylinderförmigen Erhebungen mit jeweils einer Grundfläche und Mantelfläche ausgebildet, deren jeweilige Längsachse sich in eine erste Richtung erstreckt hätten, wobei vorzugsweise deren Grundflächen und deren Mantelflächen miteinander teilflächig überlappt hätten.

Von Vorteil ist diese Weiterbildung, da dadurch ein im Wesentlichen vollständiges oder vollständiges Ineinanderlaufen von benachbart aufgetragenen Tropfen bewirkt wird, sodass keine Glättung der sonst ausgebildeten halbzylinderförmigen Erhebungen des reliefartigen Dekors durch Auftrag von zusätzlichem Material in einem zeit- und kostenintensiven nachträglichem Schritt mehr erforderlich wird. Ausserdem hat diese Weiterbildung den Vorteil, dass Erhebungen realisiert werden können, die keinen "Kaffeeringeffekt" zeigen.

Ohne entsprechendes In-Schwingung-Versetzen kann es während dem Einengen der Tropfen aufgrund der sich dabei verändernden Tropfenform zu einer nicht homogenen Verdunstungs-/Verdampfungsrate an dessen Oberfläche kommen, die zu einer ungleichmäßigen Partikelgrößenverteilung führt, und die sich letztlich darin äußert, dass am Rande der habzylinderförmigen Erhebungen der Glasurschicht überwiegend kleinere Partikel anzutreffen sind. Wenn ein derartiges reliefartiges Dekor mit einem einfarbigen Bildmotiv bedruck würde, dann würde diese inhomogene Partikelgrößenverteilung in den Erhebungen oft wiederum zu einer inhomogenen Reaktivität der Partikel der Glasursuspension gegenüber anorganischen Pigmenten des Bildmotivs während dem Brennvorgang führen, sodass an den Rändern der halbzylinderförmigen Erhebungen sich eine andere Farbe des Bildmotivs ausbilden würde als im Mittelbereich derselben.

Eine Ausbildung der ersten Glasurschicht mit entsprechenden unmittelbar benachbarten halbzylinderförmigen Erhebungen erfolgt verfahrensbedingt, wenn beispielsweise das Abgeben und das Einengen der Tropfen der ersten Glasursuspension auf das Druckmedium dergestalt erfolgt, dass unmittelbar auf das Druckmedium aufgebrachte benachbarte Tropfen nicht oder nur teilweise in Schritt (b) im Zustand einer Suspension ineinanderlaufen.

Unterschiedliche Faktoren beeinflussen die Ausbildung von Erhebungen des reliefartigen Dekors. Hierzu gehören verfahrensbedingt unter anderem die Temperatur des keramischen Druckmediums und der Glasursuspension, die Thixotropie und die Fliesseigenschaften der Glasursuspension, das Benetzungsverhalten der Glasursuspension, die Geschwindigkeit der Relativbewegung zwischen Düsen und Druckmedium, der Abstand der auf das Medium aufgebrachten Tropfen der Glasursuspension sowie deren Volumen, die Absorptionsfähigkeit des keramischen Druckmediums gegenüber der Glasursuspension, die Verdunstungs- und/oder Verdampfungsrate der aufgebrachten Tropfen sowie die Anordnung der Düsen des ersten Tintenstrahldruckers zueinander und damit der Abstand der Düsen zueinander in Bezug auf die Oberfläche des keramischen Druckmediums sowie die Ausstossfrequenz der Tropfen. Dabei ist zu beachten, dass sich diese Faktoren auch gegenseitig beeinflussen.

Gemäss einer bevorzugten Ausführungsform wird oder werden nach Vollendung der Abgabe der Tropfen und während dem Einengen derselben das Druckmedium und/oder die auf das Druckmedium aufgebrachten Tropfen in Schwingung versetzt.

Gemäss einer weiteren bevorzugten Ausführungsform des Verfahrens wird eine deckende Glasur- oder Engobe- oder Smaltobesuspension auf die erste Glasurschicht und auf Teile der Oberfläche, die nicht mit der ersten Glasurschicht bedeckt sind aber zumindest mit der ersten Glasurschicht angrenzen, vorzugsweise auf die gesamte mit der ersten Glasurschicht bedeckten und nicht bedeckten Oberfläche des keramischen Druckmediums, mit einer ersten Abgabevorrichtung durch Besprühen oder Giessen derselben auf die entsprechenden Oberflächen aufgetragen und dann teilweise oder vollständig eingeengt.

Von Vorteil ist diese Weiterbildung und diese zu Anspruch 3 alternative technische Lösung, da dadurch eine teilweise oder vollständige materielle Homogenisierung des reliefartigen Dekors mit der Verwendung einer kleineren Menge an deckender Glasur- oder Engobe- oder Smaltobesuspension als beim Verfahren nach Anspruch 3 notwendig ist, erzielt werden kann.

Unter einer Suspension aus "Smaltobe" wird in der vorliegenden Beschreibung eine Mischung einer Glasursuspension und einer Engobesuspension verstanden.

Die mit Schritt (b) gebildeten Erhebungen können vor dem entsprechenden Auftrag der deckenden Glasur- oder Engobe- oder Smaltobesuspension durch Einwirken von Energie, insbesondere Wärme, mithilfe einer geeigneten Energiequelle teilweise oder vollständig getrocknet werden.

Die Wärmequelle kann eine NIR- und/oder IR-Strahlungsquelle sein.

Gemäss einer bevorzugten Ausführungsform des erfindungsgemässen Verfahrens wird das Druckmedium über ein mechanisches Mittel, das eine mechanische Schwingung in eine oder mehrere Richtungen erzeugt, in Schwingung versetzt.

Das mechanische Mittel kann eine Einsatzeinrichtung zur Aufnahme des Druckmediums sein, in die das keramische Druckmedium eingesetzt wird.

Gemäss einer bevorzugten Ausführungsform wird das keramische Druckmedium, vorzugsweise nach Vollendung der Abgabe der Tropfen, und während des Einengens der Tropfen über eine Transporteinrichtung in eine Transportrichtung transportiert, wobei die Transporteinrichtung in mehrere Module unterteilt ist und zumindest ein Modul über das eine mechanische Mittel, das die eine mechanische Schwingung erzeugt, in Schwingung versetzt wird, wobei das Modul durch das mechanische Mittel bevorzugt synchron mit den Druckmedien in Schwingung gebracht wird.

Gemäss einer besonders bevorzugten Ausführungsform liegt die Amplitude der mechanischen Schwingung, die das mechanische Mittel erzeugt, in einer Grössenordnung von 1 µm bis 100000µm, bevorzugt 100 µm bis 10000µm und die Frequenz der Schwingung in einer Grössenordnung von 2 Hz -10000 Hz, bevorzugt 10 Hz -1000 Hz, besonders bevorzugt 10 Hz -100 Hz.

Gemäss einer bevorzugten Ausführungsform werden die Tropfen der Glasursuspension in einer ersten Dimension der Oberfläche des Druckmediums in einer vorbestimmten Auflösung X und in einer quer zur ersten Dimension ausgerichteten zweiten Dimension in einer vorbestimmten Auflösung Y auf das Druckmedium aufgetragen und auf dem Druckmedium eingeengt, während dessen das Druckmedium über ein mechanisches Mittel, das eine mechanische Schwingung in eine oder mehrere Richtungen erzeugt, in Schwingung versetzt wird, wobei die Amplitude der mechanischen Schwingung, die das mechanische Mittel erzeugt, zumindest in Richtung der erste Dimension ≤1/2 der Auflösung X, bevorzugt ≤ der Auflösung X beträgt, und wobei die Frequenz der Schwingung in einer Grössenordnung von 2 Hz -10000 Hz, bevorzugt 10 Hz -1000 Hz, besonders bevorzugt 10 Hz -100 Hz liegt. Die zweite Dimension entspricht der Richtung der unidirektionalen Relativbewegung zwischen den Düsen und dem Druckmedium.

Von Vorteil ist diese Weiterbildung, da dadurch die durch die gewünschte Auflösung vorgegebene Bildschärfe der Glasurschichten mit ausgebildeten Erhebungen im Wesentlichen beibehalten werden kann und gleichzeitig die Ausbildung von Inhomogenitäten teilweise oder gar vollständig verhindert werden kann.

Beim Tintenstrahldruck wird die Auflösung durch den Abstand der durch den Druck aufgebrachten Tropfen auf die Oberfläche des keramischen Druckmediums bestimmt. Im Falle des zweidimensionalen Drucks kann die Auflösung in einer Dimension sich von der Auflösung in der anderen Dimension unterscheiden. Die Oberfläche des keramischen Druckmediums ist typischerweise im Wesentlichen flach oder vollständig flach.

Gemäss einer alternativen oder ergänzenden bevorzugten Ausführungsform des erfindungsgemässen Verfahrens werden die auf das Druckmedium aufgebrachten Tropfen durch Schallwellen in Schwingung versetzt.

Gemäss einer besonders bevorzugten Ausführungsform werden die auf das Druckmedium aufgebrachten Tropfen in Schwingung versetzt, indem die Oberfläche des Druckmediums, auf der die Tropfen aufgebracht wurden durch Schallwellen mit einer Schallintensität in der Grössenördnung von 50 W/m2 bis 10000 W/m2, bevorzugt 200 W/m2 bis 1000 W/m2 und in einem Frequenzbereich in der Grössenordnung von 5Hz bis 16kH, bevorzugt von 5Hz bis 2000Hz über einen ausreichenden Zeitintervall beschallt wird.

Gemäss einer bevorzugten Ausführungsform des erfindungsgemässen Verfahrens wird vor der Ausbildung der ersten Glasurschicht gemäß Schritt (b) eine grundierende Glasur- oder Engobe- oder Smaltobesuspension auf zumindest einem Teil, vorzugsweise auf die gesamte Oberfläche des keramischen Druckmediums durch Besprühen oder Giessen derselben mit einer zweiten Abgabevorrichtung aufgetragen und teilweise oder vollständig eingeengt. Dadurch wird eine Grundierungsschicht aus Glasur oder Engobe oder Smaltobe zur Aufnahme der ersten Glasursuspension direkt auf der Oberfläche des keramischen Druckmediums ausbildet.

In Schritt (a) kann als keramisches Druckmediums ein gebranntes oder ungebranntes keramisches Druckmedium bereitgestellt werden. Statt einem keramischen Druckmedium kann auch ein glasartiges Druckmedium zum Einsatz kommen. In Bezug auf den Brennvorgang ist jedenfalls wichtig, dass das Druckmedium brennstabil ist.

Die Porosität der Oberfläche der grundierenden Glasur- oder Engobe- oder Smaltobeschicht bzw. der volumetrische Durchmesser der Partikelgrösse d50(v) und/oder d100(v) der Partikel der grundierenden Glasur- oder Engobe- oder Smaltobeschicht kann kleiner sein als die Porosität der Oberfläche des ungebrannten oder gebrannten keramischen Druckmediums bzw. als der volumetrische Durchmesser der Partikelgrösse d50(v) und/oder d100(v) der Partikel des ungebrannten oder gebrannten keramischen Druckmediums.

Dementsprechend kann mit der Aufbringung der grundierenden Glasur- oder Engobe- oder Smaltobeschicht der Einbrennprozess leichter kontrolliert werden.

In einer ersten bevorzugten Ausführungsform des erfindungsgemässen Verfahrens ist oder sind die Abgabevorrichtung zur Abgabe der deckenden Glasur- oder Engobe- oder Smaltobesuspension und die Abgabevorrichtung zum Auftrag der grundierenden Glasur- oder Engobe- oder Smaltobesuspension dieselbe Abgabevorrichtung oder unterschiedliche Abgabevorrichtungen, die Sprühdüsen umfasst oder umfassen.

Entsprechend kann gemäß zumindest einer dieser bevorzugten Ausführungsformen der Auftrag der deckenden Glasur- oder Engobe- oder Smaltobesuspension und/oder der Auftrag der grundierenden Glasur- oder Engobe- oder Smaltobesuspension durch Besprühen derselben auf die entsprechende Oberfläche oder Oberflächen mittels Sprühdüsen erfolgen.

In einer zweiten bevorzugten Ausführungsform des erfindungsgemässen Verfahrens ist oder sind die Abgabevorrichtung zur Abgabe der deckenden Glasur- oder Engobe- oder Smaltobesuspension und die Abgabevorrichtung zum Auftrag der grundierenden Glasur- oder Engobe- oder Smaltobesuspension dieselbe Abgabevorrichtung oder unterschiedliche Abgabevorrichtungen, die zumindest eine längliche Schlitzdüse umfasst oder umfassen.

Entsprechend kann gemäß der zweiten bevorzugten Ausführungsformen der Auftrag der deckenden Glasur- oder Engobe- oder Smaltobesuspension und/oder der Auftrag der grundierenden Glasur- oder Engobe- oder Smaltobesuspension durch Giessen derselben auf die entsprechende Oberfläche oder Oberflächen mittels zumindest einer länglichen Schlitzdüse erfolgen. Längliche Schlitzdüsen sind so konstruiert, dass sie die Glasur- oder Engobe- oder Smaltobesuspension aus der Schlitzdüse in Form eines Vorhangs kontinuierlich über eine längere Zeitspanne und nicht stossartig abgeben können.

Die sogenannte "Velatrice Masterfall" von der Firma Airless ist ein Beispiel für eine solche Abgabevorrichtung. Aus dem Stand der Technik sind auch Glocken-Systeme bekannt, die ausgelegt sind die Glasur in Form eines Vorhangs, der glockenförmig ist, durch Giessen abzugeben.

Die länglichen Schlitzdüsen können Flachstrahldüsen sein.

In einer besonders bevorzugten Ausführungsform des erfindungsgemässen Verfahrens wird nach dem Ausbilden der deckenden Glasur- oder Engobe- oder Smaltobeschicht ein vorgegebenes ein- oder mehrfarbiges Bildmotiv auf die Oberfläche der deckenden Glasur- oder Engobe- oder Smaltobeschicht mit einer Applikationsvorrichtung, die vorzugsweise ein Tintenstrahldrucker ist, aufgebracht. Die Applikationsvorrichtung kann ein zweiter Tintenstrahldrucker sein, wobei in diesem Fall das Aufbringen des vorgegebenen ein- oder mehrfarbigen Bildmotivs auf die Oberfläche der deckenden Glasur- oder Engobe- oder Smaltobeschicht erfolgt, indem Tropfen einer oder mehrerer Tintenstrahldrucktinten mit jeweils anorganischen Pigmenten abgegeben werden.

Von Vorteil ist diese Weiterbildung, da dadurch Farbgleichheit an mit derselben Farbe bedruckten Stellen der Oberfläche nach dem Brennen erzielt werden kann. Demgegenüber hat das Bedrucken von Stellen der ersten Glasurschicht und von Teilen der Oberfläche, die nicht mit der ersten Glasurschicht bedeckt sind, mit derselben Farbe in der Regel zur Folge, dass sich unterschiedliche Färbungen nach dem Brennen ausbilden.

Das Einengen durch Absorption der flüssigen Bestandteile der ersten Glasursuspension kann durch die in Kontakt stehende Schicht oder Oberfläche und/oder durch Trocknung der ersten Glasursuspension erfolgen.

Gemäss einer bevorzugten Ausführungsform werden die keramischen Druckmedien vor dem Abgeben von Tropfen der ersten Glasursuspension gemäß Schritt (b) auf eine Temperatur zwischen 20°C und 120°C gebracht, vorzugsweise zwischen 50°C und 120°C, wobei das Abgeben der Tropfen gemäß Schritt (b) auf den Teil der Oberfläche erfolgt während das keramische Druckmedium eine entsprechende Temperatur zwischen 20°C und 120°C, vorzugsweise zwischen 50°C und 120°C aufweist.

Gemäss einer besonders bevorzugten Ausführungsform des erfindungsgemässen Verfahrens umfasst dieses den zusätzlichen Schritt:
- Auftragen von trockenem keramischem Material in Form von Partikeln zumindest auf die abgegebene erste Glasursuspension und Fixieren des Materials durch die erste Glasursuspension, wobei folgend nicht fixiertes keramisches Material entfernt wird, sodass Erhebungen des reliefartigen Dekors gebildet werden.

Von Vorteil ist diese Weiterbildung, da dadurch einerseits ein reliefartiges Dekor mit einer ausgeprägteren, höheren Strukturhöhe und andererseits ein rascheres Einengen der Tropfen durch Absorption des aufgetragenen keramischen Materials durch die erste Glasurschicht erfolgt. Von Nachteil hingegen ist, dass beim Entfernen des nicht fixierten keramischen Materials sich jedoch meist nicht vermeiden lässt, dass auch in sehr geringem Maße Partikel vom Teil der Oberfläche mitentfernt werden, auf dem die erste Glasur aufgetragen wurde, sodass sich eine unregelmäßige Oberfläche des reliefartigen Dekors bilden kann.

Diesem Problem kann jedoch Abhilfe verschafft werden, wenn die deckende Glasur- oder Engobe- oder Smaltobeschicht auf die Schicht aus dem keramischen Material aufgetragen wird.

Das Entfernen des nicht fixierten keramischen Materials kann beispielsweise mit einer Absaugvorrichtung oder einer Abblasvorrichtung erfolgen.

Gemäß einer weiteren Ausführungsform des Verfahrens wird auf dem aufgetragenen Bildmotiv eine Schutzschicht umfassend eine Fritte, die nach dem Einbrennen durchsichtig wird, aufgetragen.

Gemäß einer besonders bevorzugten Ausführungsform des erfindungsgemässen Verfahrens wird die erste Glasurschicht in solchen Mengen aufgetragen, dass die dadurch eingeengten ausgebildeten Erhebungen eine Höhe in einem Bereich zwischen von 70 bis 1000 µm aufweisen, vorzugsweise eine Höhe in einem Bereich zwischen von 150 bis 1000 µm aufweisen.

Als erste Glasursuspension kann beispielsweise eine Glasursuspension verwendet werden, umfassend Wasser, zumindest eine nicht-wässrige polare Flüssigkeit, ein zumindest eine Fritte, und vorzugsweise ein Flussmittel, enthaltendes Glasurmaterial in Form von Partikeln, wobei das Glasurmaterial Partikel wenigstens einer Partikelgrößenpopulation enthält, die einen volumetrischen Durchmesser der Partikelgrösse von 10 µm ≤ d50(v) ≤ 50 µm und von 50 µm ≤ d100(v) ≤ 100 µm aufweist.

Als deckende Glasur oder Engobe, jeweils in Form einer Suspension, kann beispielsweise eine Glasur- oder Engobesuspension verwendet werden, umfassend Wasser, zumindest eine Fritte, und vorzugsweise ein Flussmittel, enthaltendes Glasur- oder Engobematerial, jeweils in Form von Partikeln, wobei das Glasur- oder Engobematerial Partikel wenigstens einer Partikelgrößenpopulation enthält, wobei deren Partikel ≥45 µm zwischen 0 und 7 Gew% des Gesamtgewicht des Glasur- oder Engobematerial ausmachen.

Als grundierende Glasur oder Engobe, jeweils in Form einer Suspension, kann beispielsweise eine Glasur- oder Engobesuspension verwendet werden, umfassend Wasser, zumindest eine Fritte, und vorzugsweise ein Flussmittel, enthaltendes Glasur- oder Engobematerial, jeweils in Form von Partikeln, wobei das Glasur- oder Engobematerial Partikel einer Partikelgrößenpopulation enthält, wobei deren Partikel ≥45 µm zwischen 0 und 7 Gew% des Gesamtgewicht des Glasur- oder Engobematerial ausmachen.

Gemäß einer besonders bevorzugten Ausführungsform des Verfahrens enthalten das Glasurmaterial der ersten Glasursuspension und das Glasurmaterial der deckenden Glasursuspension Partikel wenigstens zweier voneinander unterschiedlicher Partikelgrößenpopulationen, wobei das Glasurmaterial der deckenden Glasursuspension Partikel einer Partikelgrößenpopulation enthält, die einen volumetrischen Durchmesser der Partikelgrösse von d100(v) aufweist und der größer ist als der volumetrische Durchmesser der Partikelgrösse der entsprechenden Population des das Glasurmaterials der ersten Glasursuspension.

Von Vorteil ist diese Weiterbildung, da dadurch eine erhöhte Prozesssicherheit beim Einbrennvorgang erzielt werden kann. Diese erfindungsgemäße Kombination der Glasuren verhalten sich so, dass reliefartige Dekore in kürzerer Zeit defektlos hergestellt werden können, als wenn nur die erste Glasurschicht unter denselben Brennbedingungen gebrannt werden würde.

Gemäß einer besonders bevorzugten Ausführungsform des Verfahrens wird der erste Tintenstrahldrucker als Tintenstrahldrucker mittels Stössel betriebener Tintenstrahldruckköpfe bereitgestellt.

Mit dem erfindungsgemässen Verfahrens lässt sich ein gebranntes keramisches Druckmedium herstellen.

Ein gebranntes mit einem reliefartigen Dekor versehenes keramisches Druckmedium umfasst auf einen Teil seiner Oberfläche eine erste Glasurschicht mit Erhebungen, bei dem die Erhebungen der ersten Glasurschicht mit jeweils im Wesentlichen flacher Oberfläche oder flacher Oberflächen ausbildet sind, und wobei das Druckmedium eine deckende Glasur- oder Engobe- oder Smaltobeschicht auf der ersten Glasurschicht und/oder auf Teile der Oberfläche umfasst, die nicht mit der ersten Glasurschicht bedeckt sind aber zumindest an die erste Glasurschicht angrenzen, wobei die deckende Glasur- oder Engobe- oder Smaltobeschicht besonders bevorzugt einen Teil oder die gesamte Oberfläche, d.h. sowohl mit erster Glasurschicht bedeckte als auch nicht bedeckte Teile des keramischen Druckmediums, bedeckt.

Gemäß einer bevorzugten Ausführungsform umfasst das Druckmedium zwischen der ersten Glasurschicht und seiner Oberfläche eine grundierende Glasur- oder Engobe- oder Smaltobeschicht.

Gemäß einer weiteren bevorzugten Ausführungsform des Druckmedium ist auf der deckenden Glasur- oder Engobe- oder Smaltobeschicht ein ein- oder mehrfarbiges Motiv ausgebildet, welches vorzugsweise aus anorganischen Pigmenten gebildet ist.

Gemäss einer besonders bevorzugten Ausführungsform des Druckmediums ist zwischen der ersten Glasurschicht und der deckenden Glasur- oder Engobe- oder Smaltobeschicht eine Schicht aus keramischem Material zur Strukturerhöhung der Erhebungen der ersten Glasurschicht ausgebildet.

Gemäss einer bevorzugten Ausführungsform des dritten Aspekts der Erfindung ist das Fluid ein gasförmiges Fluid, vorzugsweise ein Gas oder ein Gasgemisch, besonders bevorzugt Luft.

Gemäss einer weiteren bevorzugten Ausführungsform des dritten Aspekts der Erfindung wird der zumindest eine kontinuierliche Fluidstrom in Form eines Luftmessers gegen die Oberfläche des Druckmediums, auf die die Tropfen aufgebracht wurden, gerichtet, während dessen vorzugsweise sich der Fluidstrom und das Druckmedium relativ zueinander bewegen.

## Patentansprüche

1. Verfahren zum Erzeugen eines reliefartigen Dekors auf einer Oberfläche eines keramischen Druckmediums (101), umfassend die Schritte:
a) Bereitstellen eines keramischen Druckmediums (101);
b) Abgeben von Tropfen einer ersten Glasursuspension, die zumindest eine Fritte enthaltendes Glasurmaterial in Form von Partikeln umfasst, mit einer Vielzahl von Düsen eines ersten Tintenstrahldruckers auf einen Teil der Oberfläche und Einengen der auf dem Teil aufgebrachten Tropfen, dergestalt, dass zumindest teilweise eingeengtes Glasurmaterial Erhebungen ausbildet, wobei während des Abgebens der Tropfen eine kontinuierliche unidirektionale Relativbewegung zwischen den Düsen und dem Druckmedium erfolgt;
c) Brennen des keramischen Druckmediums, um ein eingebranntes reliefartiges Dekor auf der Oberfläche des Druckmediums zu erzeugen;
**dadurch gekennzeichnet, dass** in Schritt (b) das Druckmedium und/oder die auf das Druckmedium aufgebrachten Tropfen in Schwingung versetzt wird oder werden oder dass zumindest ein kontinuierlicher Fluidstrom aus einer fluidstromaktivierenden Vorrichtung gegen die Oberfläche des Druckmediums, auf die die Tropfen aufgebracht wurden, gerichtet wird, vorzugsweise dergestalt, dass eingeengtes Glasurmaterial Erhebungen mit jeweils im Wesentlichen flacher Oberfläche oder flacher Oberfläche ausbildet.

2. Verfahren nach Anspruch 1 **dadurch gekennzeichnet, dass** ohne entsprechendes In-Schwingung-Versetzen verfahrensbedingt sich die erste Glasurschicht mit unmittelbar benachbarten halbzylinderförmigen Erhebungen mit jeweils einer Grundfläche und Mantelfläche ausgebildet hätte, deren jeweilige Längsachse sich in eine erste Richtung erstreckt hätten, wobei vorzugsweise deren Grundflächen und deren Mantelflächen miteinander teilflächig überlappt hätten.

3. Verfahren Anspruch 1 oder 2 **dadurch gekennzeichnet, dass** eine deckende Glasur- oder Engobe- oder Smaltobesuspension auf die erste Glasurschicht und auf Teile der Oberfläche, die nicht mit der ersten Glasurschicht bedeckt sind aber zumindest mit der ersten Glasurschicht angrenzen, vorzugsweise auf die gesamte mit der ersten Glasurschicht bedeckten und nicht bedeckten Oberfläche des keramischen Druckmediums, mit einer ersten Abgabevorrichtung durch Besprühen oder Giessen derselben auf die entsprechenden Oberflächen aufgetragen und dann teilweise oder vollständig eingeengt.

4. Verfahren nach zumindest einem der Ansprüche 1 bis 3, **dadurch gekennzeichnet, dass** das Druckmedium über ein mechanisches Mittel, das eine mechanische Schwingung in eine oder mehrere Richtungen erzeugt, in Schwingung versetzt wird.

5. Verfahren nach Anspruch 4 **dadurch gekennzeichnet, dass** das mechanische Mittel eine Einsatzeinrichtung zur Aufnahme des Druckmediums ist, in die das keramische Druckmedium eingesetzt wird.

6. Verfahren nach Anspruch 4 **dadurch gekennzeichnet, dass** das keramische Druckmedium während des Einengens der Tropfen über eine Transporteinrichtung in eine Transportrichtung transportiert wird, wobei die Transporteinrichtung in mehrere Module unterteilt ist und zumindest ein Modul über ein mechanisches Mittel, das die eine mechanische Schwingung erzeugt, in Schwingung versetzt wird, wobei das Modul durch das mechanische Mittel bevorzugt synchron mit den Druckmedien in Schwingung gebracht wird.

7. Verfahren nach einem der Ansprüche 4 bis 6 **dadurch gekennzeichnet, dass** die Amplitude der mechanischen Schwingung, die das mechanische Mittel erzeugt, in einer Grössenordnung von 1 µm bis 100000µm, bevorzugt 100 µm bis 10000µm und die Frequenz der Schwingung in einer Grössenordnung von 2 Hz -10000 Hz, bevorzugt 10 Hz -1000 Hz, besonders bevorzugt 10 Hz -100 Hz liegt.

8. Verfahren nach Anspruch 7 **dadurch gekennzeichnet, dass** die Tropfen der Glasursuspension in einer ersten Dimension der Oberfläche des Druckmediums in einer vorbestimmten Auflösung X und in einer quer zur ersten Dimension ausgerichteten zweiten Dimension in einer vorbestimmten Auflösung Y auf das Druckmedium aufgetragen und auf dem Druckmedium eingeengt werden, während dessen das Druckmedium über das mechanisches Mittel, das eine mechanische Schwingung in eine oder mehrere Richtungen erzeugt, in Schwingung versetzt wird, wobei die Amplitude der mechanischen Schwingung, die das mechanische Mittel erzeugt, zumindest in Richtung der ersten Dimension ≤1/2 der Auflösung X, bevorzugt ≤ der Auflösung X beträgt, und wobei die Frequenz der Schwingung in einer Grössenordnung von 2 Hz -10000 Hz, bevorzugt 10 Hz -1000 Hz, besonders bevorzugt 10 Hz -100 Hz liegt.

9. Verfahren nach zumindest einem der Ansprüche 1 bis 8, **dadurch gekennzeichnet, dass** die auf das Druckmedium aufgebrachten Tropfen durch Schallwellen in Schwingung versetzt werden.

10. Verfahren nach Anspruch 9 **dadurch gekennzeichnet, dass** die auf das Druckmedium aufgebrachten Tropfen in Schwingung versetzt werden, indem die Oberfläche des Druckmedium, auf der die Tropfen aufgebracht wurden durch Schallwellen mit einer Schallintensität in der Grössenördnung von 50 W/m2 bis 1000 W/m2, bevorzugt 200 W/m2 bis 1000 W/m2 in einem Frequenzbereich und in der Grössenordnung von 5Hz bis 16kH, bevorzugt von 5Hz bis 2000Hz über einen ausreichenden Zeitintervall beschallt wird.

11. Verfahren nach zumindest einem der Ansprüche 1 bis 10 **dadurch gekennzeichnet, dass** vor der Ausbildung der ersten Glasurschicht gemäß Schritt (b) eine grundierende Glasur- oder Engobe- oder Smaltobesuspension auf zumindest einem Teil, vorzugsweise auf die gesamte Oberfläche des keramischen Druckmediums durch Besprühen oder Giessen derselben mit einer zweiten Abgabevorrichtung aufgetragen und teilweise oder vollständig eingeengt.

12. Verfahren nach zumindest einem der Ansprüche 3, 11 **dadurch gekennzeichnet, dass** die Abgabevorrichtung zur Abgabe der deckenden Glasur- oder Engobe- oder Smaltobesuspension und/oder zum Auftrag der grundierende Glasur- oder Engobe- oder Smaltobesuspension dieselbe Abgabevorrichtung ist oder unterschiedliche Abgabevorrichtungen sind, die entweder Sprühdüsen oder zumindest eine längliche Schlitzdüse umfasst oder umfassen.

13. Verfahren nach zumindest einem der Ansprüche 3 bis 12 **dadurch gekennzeichnet, dass** nach dem Ausbilden der deckenden Glasur- oder Engobe- oder Smaltobeschicht ein vorgegebenes ein- oder mehrfarbiges Bildmotiv auf die Oberfläche der deckenden Glasur- oder Engobe- oder Smaltobeschicht mit einer Applikationsvorrichtung, die vorzugsweise ein zweiter Tintenstrahldrucker ist, aufgebracht wird, indem vorzugsweise Tropfen einer oder mehrerer Tintenstrahldrucktinten mit jeweils anorganischen Pigmenten abgegeben werden.

14. Verfahren nach zumindest einem der vorhergehenden Ansprüche 1 bis 13 **dadurch gekennzeichnet, dass** Einengen durch Absorption der flüssigen Bestandteile der ersten Glasursuspension durch die in Kontakt stehende Schicht oder Oberfläche und/oder durch Trocknung der ersten Glasursuspension erfolgt.

15. Verfahren nach zumindest einem der vorhergehenden Ansprüche 1 bis 14 **dadurch gekennzeichnet, dass** das Verfahren den Schritt umfasst:
- Auftragen von trockenem keramischem Material in Form von Partikeln zumindest auf die abgegebene erste Glasursuspension und Fixieren des Materials durch die erste Glasursuspension, wobei folgend nicht fixiertes keramisches Material entfernt wird, sodass Erhebungen des reliefartigen Dekors gebildet werden.

16. Verfahren nach zumindest einem der vorhergehenden Ansprüche 1 bis 15 **dadurch gekennzeichnet, dass** der erste Tintenstrahldrucker als Tintenstrahldrucker mittels Stössel betriebener Tintenstrahldruckköpfe ausgebildet bereitgestellt wird.

## Claims

1. A method for producing a relief-like decor on a surface of a ceramic printing medium (101), comprising the steps of:
a) providing a ceramic printing medium (101);
b) dispensing droplets of a first glaze suspension comprising at least one frit-containing glaze material in the form of particles onto a portion of the surface using a plurality of nozzles of a first inkjet printer, and constricting the droplets applied to the portion such that at least partially constricted glaze material forms elevations, whereby a continuous unidirectional relative movement between the nozzles and the printing medium takes place during the dispensing of the droplets;
c) firing the ceramic printing medium to produce a fired relief-like decor on the surface of the printing medium;
**characterized in that** in step (b) the printing medium and/or the droplets applied to the printing medium is or are caused to oscillate, or that at least a continuous fluid stream from a fluid-stream-activating device is directed against the surface of the printing medium on which the droplets have been applied, preferably in such a way that constricted glaze material forms elevations with a substantially flat surface or with flat surface.

2. The method according to claim 1, **characterized in that**, without corresponding vibration inducement, the first glaze layer would have been formed process-related directly adjacent semi-cylindrical elevations each with a base and lateral surface, whose respective longitudinal axes would have extended in a first direction, preferably with partial overlapping of their bases and lateral surfaces.

3. The method according to claim 1 or 2, **characterized in that** a covering glaze, engobe, or smaltobe suspension is applied to the first glaze layer and to parts of the surface not covered by the first glaze layer but at least adjacent to the first glaze layer, preferably to the entire surface of the ceramic printing medium, both the covered and uncovered portions, using a first dispensing device by spraying or pouring onto the respective surfaces and then partially or fully constricted.

4. The method according to at least one of claims 1 to 3, **characterized in that** the printing medium is brought into oscillation via a mechanical means that generates a mechanical oscillation in one or more directions.

5. The method according to claim 4, **characterized in that** the mechanical means is an insertion device for receiving the printing medium, into which the ceramic printing medium is inserted.

6. The method according to claim 4, **characterized in that** the ceramic printing medium is transported in a transport direction during the constricting of the droplets by a transport device, whereby the transport device is divided into multiple modules and at least one module is brought into oscillation by a mechanical means that generates a mechanical oscillation, the module preferably being oscillated synchronously with the printing media.

7. The method according to one of claims 4 to 6, **characterized in that** the amplitude of the mechanical oscillation generated by the mechanical means is in the range of 1 µm to 100000µm, preferably 100 µm to 10000µm, and the frequency of the oscillation is in the range of 2 Hz - 10000 Hz, preferably 10 Hz - 1000 Hz, particularly preferably 10 Hz - 100 Hz.

8. The method according to claim 7, **characterized in that** the droplets of the glaze suspension are applied on the printing medium in a first dimension of the surface at a predetermined resolution X and in a second dimension oriented transversely to the first dimension at a predetermined resolution Y and constricted on the printing medium, while the printing medium is brought into oscillation via the mechanical means which generates a mechanical oscillation in one or more directions, whereby the amplitude of the mechanical oscillation generated by the mechanical means at least in the direction of the first dimension is ≤ 1/2 of the resolution X, preferably ≤ of the resolution X, and whereby the frequency of the oscillation is in the order of magnitude of 2 Hz - 10000 Hz, preferably 10 Hz - 1000 Hz, particularly preferably 10 Hz - 100 Hz.

9. The method according to at least one of claims 1 to 8, **characterized in that** the droplets applied to the printing medium are brought into oscillation by sound waves.

10. The method according to claim 9, **characterized in that** the droplets applied to the printing medium are brought into oscillation by subjecting the surface of the printing medium, onto which the droplets have been applied, to sound waves with a sound intensity in the order of magnitude of 50 W/m² to 1000 W/m², preferably 200 W/m² to 1000 W/m², within a frequency range and in the order of magnitude of 5 Hz to 16 kHz, preferably 5 Hz to 2000 Hz, for a sufficient time interval.

11. The method according to at least one of claims 1 to 10, **characterized in that** prior to forming the first glaze layer in step (b), a priming glaze, engobe, or smaltobe suspension is applied to at least a portion, preferably the entire surface of the ceramic printing medium, by spraying or pouring the same with a second dispensing device and then at least partially constricted.

12. The method according to at least one of claims 3, 11, **characterized in that** the dispensing device for applying the covering glaze, engobe, or smaltobe suspension and/or for applying the priming glaze, engobe, or smaltobe suspension is the same dispensing device or are different dispensing devices, which comprise either spray nozzles or at least one elongated slit nozzle.

13. The method according to at least one of claims 3 to 12, **characterized in that** after the formation of the covering glaze, engobe, or smaltobe layer, a predetermined single- or multicolored image motif is applied to the surface of the covering glaze, engobe, or smaltobe layer using an application device, preferably a second inkjet printer, preferably by dispensing droplets of one or more inkjet print inks each containing inorganic pigments.

14. The method according to at least one of the preceding claims 1 to 13, **characterized in that** constriction is effected by absorption of the liquid components of the first glaze suspension by the layer or surface which is in contact and/or by drying of the first glaze suspension.

15. The method according to at least one of the preceding claims 1 to 14, **characterized in that** the method comprises the step of:
- applying dry ceramic material in the form of particles at least onto the dispensed first glaze suspension and fixing the material by the first glaze suspension, with non-fixed ceramic material subsequently being removed, so that elevations of the relief-like decor are formed.

16. The method according to at least one of the preceding claims 1 to 15, **characterized in that** the first inkjet printer is provided as an inkjet printer formed with plunger-operated inkjet printheads.

## Revendications

1. Procédé de réalisation d'un décor en relief sur une surface d'un support d'impression céramique (101), comprenant les étapes suivantes :
a) mise à disposition d'un support d'impression céramique (101) ;
b) dépôt de gouttelettes d'une première suspension d'émail, comprenant au moins un matériau oscillable sous forme de frittes en particules, sur une partie de la surface à l'aide d'une pluralité de buses d'une première imprimante à jet d'encre, et concentration des gouttelettes déposées sur cette partie de manière à former, avec le matériau oscillable au moins partiellement concentré, des reliefs, un mouvement relatif unidirectionnel continu étant effectué entre les buses et le support d'impression pendant le dépôt des gouttelettes ;
c) cuisson du support d'impression céramique afin de produire un décor en relief cuit sur la surface du support ;
**caractérisé en ce qu'**à l'étape (b), le support d'impression et/ou les gouttelettes appliquées sur le support d'impression sont mis en oscillation, ou bien un flux de fluide continu issu d'un dispositif d'activation de flux de fluide est dirigé vers la surface du support sur laquelle les gouttelettes ont été déposées, de préférence de manière à ce que le matériau vitrifiable concentré forme des reliefs avec une surface sensiblement plane.

2. Procédé selon la revendication 1, **caractérisé en ce qu'**en l'absence de mise en oscillation, la première couche d'émail aurait formé, en raison du procédé, des reliefs semi-cylindriques adjacents avec chacun une surface de base et une surface latérale, dont les axes longitudinaux respectifs s'étendraient selon une première direction, les surfaces de base et latérales se recouvrant partiellement de préférence.

3. Procédé selon la revendication 1 ou 2, **caractérisé en ce qu'**une suspension couvrante d'émail, d'engobe ou de smaltobe est appliquée sur la première couche d'émail et sur des parties de la surface non recouvertes mais adjacentes à la première couche, de préférence sur toute la surface recouverte ou non, au moyen d'un premier dispositif de distribution, par pulvérisation ou coulée, et est ensuite au moins partiellement concentrée.

4. Procédé selon au moins l'une des revendications 1 à 3, **caractérisé en ce que** le support d'impression est mis en oscillation à l'aide d'un moyen mécanique produisant une oscillation dans une ou plusieurs directions.

5. Procédé selon la revendication 4, **caractérisé en ce que** le moyen mécanique est un dispositif de support destiné à recevoir le support d'impression sur lequel l'impression céramique est insérée.

6. Procédé selon la revendication 4, **caractérisé en ce que** le support d'impression est transporté dans une direction de transport pendant la concentration des gouttelettes, au moyen d'un dispositif de transport divisé en plusieurs modules, dont au moins un est mis en oscillation par un moyen mécanique générant des oscillations, ce module étant de préférence synchronisé avec le mouvement du support.

7. Procédé selon l'une des revendications 4 à 6, **caractérisé en ce que** l'amplitude de l'oscillation mécanique générée par le moyen mécanique est de l'ordre de 1 µm à 100000 µm, de préférence 100 µm à 10000 µm, et la fréquence de l'oscillation est de l'ordre de 2 Hz à 10000 Hz, de préférence 10 Hz à 1000 Hz, plus particulièrement de 10 Hz à 100 Hz.

8. Procédé selon la revendication 7, **caractérisé en ce que** les gouttelettes de la suspension d'émail sont appliquées et concentrées sur le support selon une première dimension avec une résolution prédéterminée X, et selon une seconde dimension perpendiculaire avec une résolution Y, tandis que le support est mis en oscillation par le moyen mécanique, l'amplitude de cette oacillation dans la direction de la première dimension étant inférieure ou égale à 1/2 de la résolution X, de préférence inférieure ou égale à X, et la fréquence de l'oscillation étant de l'ordre de 2 Hz - 10000 Hz, de préférence 10 Hz - 1000 Hz, plus particulièrement 10 Hz - 100 Hz.

9. Procédé selon au moins une des revendications 1 à 8, **caractérisé en ce que** les gouttelettes appliquées sont mises en oscillation par des ondes sonores.

10. Procédé selon la revendication 9, **caractérisé en ce que** les gouttelettes sont mises en oscillation en exposant la surface du support sur laquelle elles ont été appliquées à des ondes sonores d'une intensité sonore de l'ordre de 50 W/m² à 1000 W/m², de préférence 200 W/m² à 1000 W/m², dans une plage de fréquence de l'ordre de 5 Hz à 16 kHz, de préférence de 5 Hz à 2 000 Hz, pendant un intervalle de temps suffisant.

11. Procédé selon au moins une des revendications 1 à 10, **caractérisé en ce qu'**avant la formation de la première couche d'émail selon l'étape (b), une suspension d'émail, d'engobe ou de smaltobe de fond est appliquée sur au moins une partie, de préférence toute la surface du support d'impression céramique, par pulvérisation ou coulée au moyen d'un deuxième dispositif de distribution, et partiellement ou completement concentrée.

12. Procédé selon au moins une des revendications 3, 11, **caractérisé en ce que** le dispositif de distribution de la suspension couvrante et/ou de la suspension de fond est soit le même, soit différent, et comprend soit des buses de pulvérisation, soit au moins une buse à fente allongée.

13. Procédé selon au moins une des revendications 3 à 12, **caractérisé en ce qu'**après formation de la couche couvrante, un motif d'image monochrome ou multicolore est appliqué sur la surface de cette couche au moyen d'un dispositif d'application, de préférence une deuxième imprimante à jet d'encre, en déposant de préférence des gouttelettes d'une ou plusieurs encres à jet d'encre contenant des pigments inorganiques.

14. Procédé selon au moins une des revendications 1 à 13, **caractérisé en ce que** la concentration s'effectue par absorption des composants liquides de la première suspension d'émail par la couche ou surface en contact, et/ou par séchage de ladite suspension.

15. Procédé selon au moins une des revendications 1 à 14, **caractérisé en ce qu'**il comprend l'étape suivante :
- application de matériau céramique sec sous forme de particules sur la première suspension d'émail déposée, et fixation de ce matériau par la suspension, le matériau non fixé étant ensuite éliminé, de manière à former des reliefs du décor en relief.

16. Procédé selon au moins une des revendications 1 à 15, **caractérisé en ce que** la première imprimante à jet d'encre est une imprimante à jet d'encre à têtes d'impression actionnées par piston.
